# FASCICULE DE BREVET EUROPEEN

(11) **EP 1 008 226 B1**
(45) Date de publication et mention de la délivrance du brevet: **16.04.2003**
(21) Numéro de dépôt: 99926586.1
(22) Date de dépôt: 02.07.1999
(51) Int. Cl.: H02K 3/38

(54) **ALTERNATEUR DE VEHICULE AYANT UN ENROULEMENT ISOLE DU CARTER**
FAHRZEUGSWECHSELSTROMGENERATOR MIT VOM GEHÄUSE ISOLIERTER WICKLUNG
MOTOR VEHICLE ALTERNATOR WITH WINDING INSULATED FROM THE HOUSING

(30) Priorité: 02.07.1998 FR 9808455
(43) Date de publication de la demande: 14.06.2000
(73) Titulaire: VALEO EQUIPEMENTS ELECTRIQUES MOTEUR, 94000 Créteil (FR)
(72) Inventeur: PAQUET, Laurent, F-94000 Créteil (FR)
(74) Mandataire: Le Forestier, Eric
(86) Numéro de dépôt international: FR9901591
(87) Numéro de publication internationale: WO00002301

(56) Documents cités:
- WO-A-97/26700
- DE-A- 3 310 289
- US-A- 3 984 712
- US-A- 4 658 164
- PATENT ABSTRACTS OF JAPAN vol. 1995, no. 11, 26 décembre 1995 (1995-12-26) & JP 07 203649 A (FUJI ELECTRIC CO LTD), 4 août 1995 (1995-08-04)

## Description

La présente invention concerne les alternateurs ou alterno-démarreurs.

On connaît un alternateur pour véhicule comprenant un carter, un enroulement de stator et un vernis électriquement isolant, solidifié, imprégnant les chignons et les torons de l'enroulement pour leur isolation électrique à l'égard du carter avoisinant et le renforcement de leur tenue mécanique. On isole de la même façon le point neutre de l'enroulement. Toutefois, lors des sollicitations vibratoires dues au fonctionnement, il existe un risque important d'abrasion du vernis et donc de disparition de l'isolation électrique des chignons, des torons et du point neutre.

On connaît du document US-4 658 164 un alternateur pour véhicule dans lequel est prévu un écran électriquement isolant sous la forme d'une pièce rapportée s'étendant entre l'enroulement de stator et le carter. On évite ainsi les risques d'abrasion. Cependant, ce document prévoit un renvoi des torons le long de l'écran et complique leur connexion.

Un but de l'invention est d'assurer la pérennité de la protection isolante sans compliquer la connexion des torons.

En vue de la réalisation de ce but, on prévoit selon l'invention un alternateur pour véhicule, comportant un carter, un enroulement de stator, et un élément électriquement isolant interposé entre le carter et l'enroulement, l'élément isolant étant un corps solide monté sur l'un parmi le carter et l'enroulement, dans lequel l'élément isolant comprend au moins un conduit s'étendant dans un orifice du carter.

Ainsi, il n'y a pas de risque d'abrasion de l'élément isolant et on assure la pérennité de la protection.

De plus, ce conduit peut recevoir un toron de fils de sortie de phase de l'enroulement, lequel toron est ainsi isolé électriquement du carter lors de sa traversée du carter, par exemple au niveau du palier arrière du carter. De plus, ce conduit qui peut recevoir le toron avant installation dans le carter, permet de garantir la position du toron par rapport à l'enroulement, par exemple sa position rectiligne, avant réception dans le carter.

Avantageusement, le conduit s'étend à partir d'une face frontale de l'élément isolant.

Avantageusement, le conduit s'étend en saillie d'une face latérale interne de l'élément isolant en direction d'un axe du stator.

Ainsi, ce conduit est adapté à un toron cambré, à savoir qui ne sort pas du stator au droit d'une encoche du paquet de tôles mais est décalé pour être mieux placé compte tenu de la conception de la partie électronique de l'alternateur, par exemple située à l'arrière du carter.

Avantageusement, le ou chaque conduit reçoit un toron de fil de phase de l'enroulement.

Avantageusement, l'élément isolant est interposé radialement entre le carter et l'enroulement par référence à un axe du stator.

Avantageusement, l'élément isolant est interposé axialement entre le carter et l'enroulement par référence à un axe du stator.

Avantageusement, l'élément isolant s'étend en regard d'une face latérale interne de l'enroulement.

Avantageusement, l'élément isolant présente une partie d'indexation, notamment un ergot, permettant de repérer la position angulaire du stator autour d'un axe du stator.

Ainsi, on assure un repérage angulaire de la position du stator autour de son axe, ce qui facilite son installation en garantissant le positionnement correct des torons de fils de phase par rapport au carter, notamment à des orifices de celui-ci.

Avantageusement, le carter présente une deuxième partie d'indexation, notamment une rainure, apte à coopérer avec la partie d'indexation de l'élément isolant.

On prévoit également selon l'invention un procédé de fabrication d'un alternateur pour véhicule, comprenant un carter, un enroulement de stator, et un élément électriquement isolant interposé entre le carter et l'enroulement, dans lequel on fournit l'élément isolant sous la forme d'un corps solide comprenant au moins un conduit, on monte l'élément isolant sur l'un parmi le carter et l'enroulement et on introduit le conduit dans un orifice du carter.

Avantageusement, on monte l'élément isolant sur l'enroulement.

Avantageusement, on monte l'élément isolant sur le carter.

Les caractéristiques et avantages de l'invention apparaîtront encore dans la description suivante d'un mode préféré de réalisation et d'une variante donnés à titre d'exemples non limitatifs. Aux dessins annexés :
- la figure 1 est une vue partielle en coupe axiale d'un alternateur selon l'invention illustrant le stator et le carter ;
- les figures 2 et 3 sont deux vues en perspective de dessus et de dessous de l'élément isolant de la figure 1 ;
- les figures 4 et 5 sont deux vues analogues à la figure 1 montrant une variante de réalisation, respectivement au niveau d'un des torons de fils de phase et au niveau du point neutre ; et
- les figures 6 et 7 sont deux vues analogues aux figures 2 et 3 montrant l'élément isolant des figures 4 et 5.

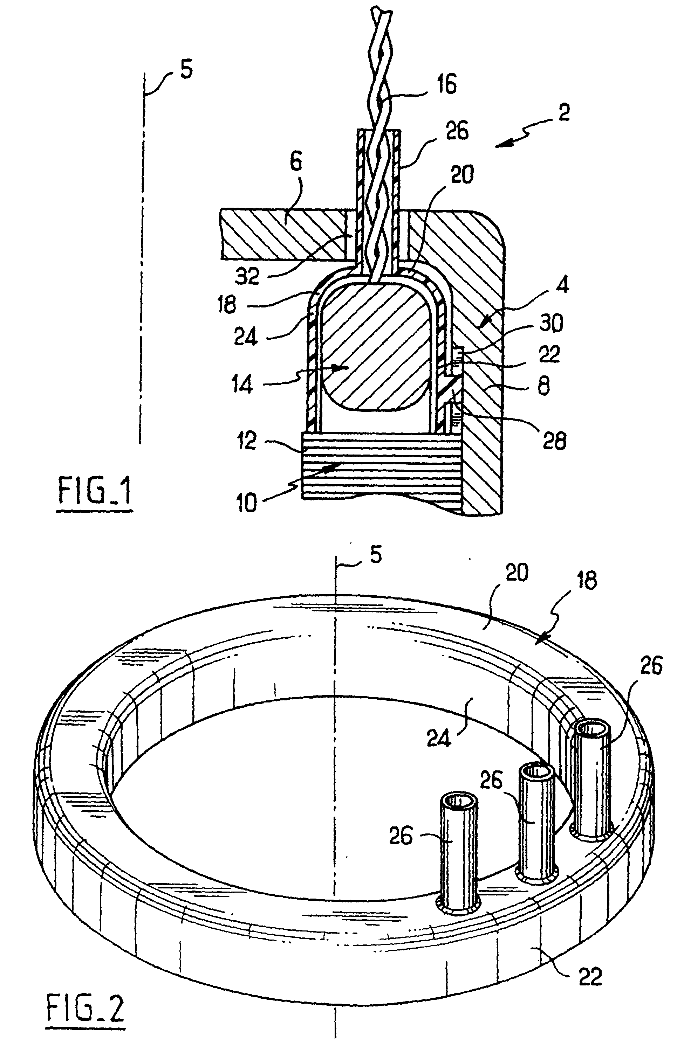

En référence aux figures 1 à 3, l'alternateur 2 comprend classiquement un arbre d'axe 5, et un carter dont seule une carcasse 4 a ici été illustrée. Cette carcasse présente une paroi arrière plane 6 perpendiculaire à l'axe 5, formant palier arrière pour l'arbre, et une paroi latérale cylindrique 8 d'axe 5. Cette carcasse est obturée par un couvercle formant palier avant, non représenté. L'alternateur comprend un stator 10 comportant un paquet de tôles 12 sur lequel est bobiné un enroulement 14. Les fils de l'enroulement sont notamment reçus dans des encoches du paquet de tôles 12, non illustrées, parallèlement à l'axe. L'enroulement 14 constitue des chignons émergeant à l'extrémité axiale arrière du paquet de tôles 12. Cet enroulement comprend des torons 16 de fils de phase, ici au nombre de trois puisque le bobinage est dit simple. Les torons 16 émergent d'une face d'extrémité axiale arrière de l'enroulement 14.

Selon l'invention, l'alternateur comprend un élément électriquement isolant 18 constitué ici par une pièce d'un seul tenant en matière plastique. Cet élément 18 a une forme générale annulaire profilée autour de l'axe 5. Le profil est inscrit dans un plan radial à l'axe 5 et a la forme d'une gorge en "U" définissant un fond plan 20 ou paroi d'extrémité axiale arrière, et deux parois latérales respectivement externe 22 et interne 24 de forme cylindrique d'axe 5 et en regard l'une de l'autre. L'élément isolant 18 comprend trois conduits cylindriques 26 s'étendant, avec leurs axes parallèles à l'axe 5, en saillie du fond 20 du côté opposé aux parois latérales 22, 24. Les trois conduits 26 sont proches les uns des autres autour de l'axe 5.

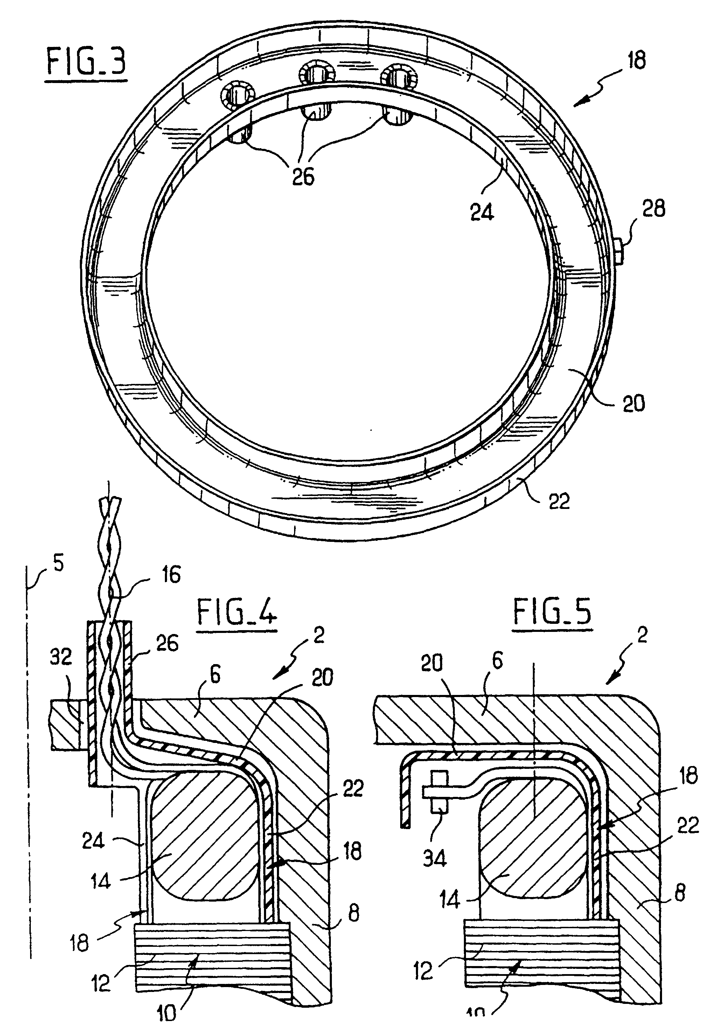

La paroi latérale externe 22 porte un ergot 28 s'étendant radialement en saillie vers l'extérieur. La paroi latérale 8 de la carcasse présente intérieurement une rainure 30 parallèle à l'axe 5 et apte à recevoir cet ergot 28 lors du montage du stator dans le carter. L'ergot 28 et la rainure 30 ont été ramenés dans le plan de coupe sur la figure 1 pour plus de clarté mais la position préférée exacte de l'ergot 28 (dont découle celle de la rainure 30) est indiquée à la figure 3.

Lors de l'assemblage de l'alternateur, on constitue le stator et on monte l'élément isolant 18, préalablement fabriqué par moulage, coaxialement sur l'enroulement 14 en le disposant par dessus les chignons et en insérant les trois torons 16 dans les trois conduits 26 respectifs. De la sorte, l'élément isolant 18 recouvre les faces interne et externe, et la face d'extrémité axiale des chignons. Les bords de l'élément isolant 18 sont en butée axiale contre le paquet de tôles 12. On monte ensuite le stator 10 dans la carcasse 4. La réception de l'ergot 28 dans la rainure 30 permet alors d'obtenir le bon positionnement angulaire du stator 10 par rapport à la carcasse 4 autour de l'axe 5 pour que les torons 16 et conduits 26 soient en regard d'orifices 32 ménagés sur la paroi arrière 6 de la carcasse, puis pénètrent dans ces orifices 32. A l'issue de ce montage, l'élément isolant 18 est interposé axialement entre la paroi d'extrémité 6 et l'enroulement 14, et radialement entre la paroi latérale 8 et l'enroulement 14. De plus, il s'étend en regard d'une face latérale interne de l'enroulement. On assure ainsi l'isolation électrique des chignons et des torons, y compris au niveau des orifices 32, à l'égard du carter 4.

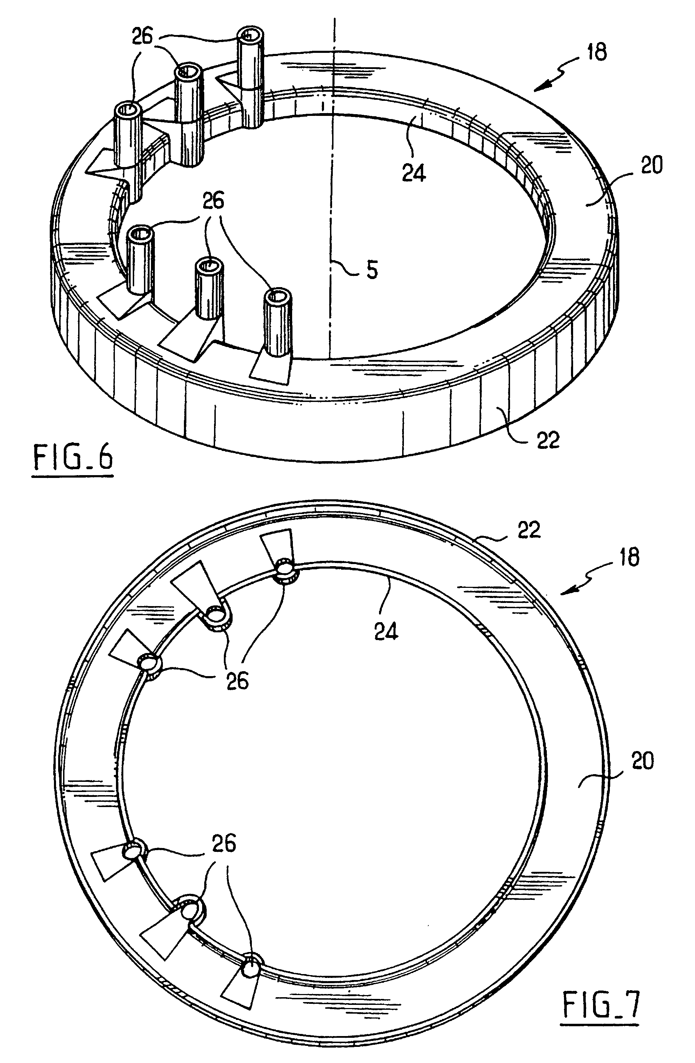

Dans la variante des figures 4 à 7, l'enroulement 14 est identique à celui de la figure 1, mis à part que les torons 16 sont déportés pour s'étendre en saillie de l'enroulement suivant la direction radiale, du côté de l'axe 5. Par conséquent, les conduits 26 sont également réalisés en saillie de la paroi latérale interne 24 de l'élément isolant 18 pour recevoir les torons 16 dans cette configuration. De plus, les torons 16 de fils de phase sont cette fois au nombre de six, le bobinage étant double. Les conduits 26 sont donc aussi au nombre de six. Le point neutre 34 de l'enroulement 14 a été illustré sur la figure 5.

On pourrait envisager de monter l'élément isolant 18 dans la carcasse 4 avant de rapporter le stator 10 sur celle-ci.

L'élément isolant 18 pourra être constitué en plusieurs pièces fixées les unes aux autres, avant de le rapporter sur l'alternateur.

## Revendications

1. Alternateur (2) pour véhicule, comportant un carter (4), un enroulement (14) de stator, et un élément électriquement isolant (18) interposé entre le carter (4) et l'enroulement (14), l'élément isolant (18) étant un corps solide monté sur l'un parmi le carter et l'enroulement, **caractérisé en ce que** l'élément isolant (18) comprend au moins un conduit (26) s'étendant dans un orifice (32) du carter (4).

2. Alternateur selon la revendication 1, **caractérisé en ce que** le conduit (26) s'étend à partir d'une face frontale de l'élément isolant (18).

3. Alternateur selon la revendication 1 ou 2, **caractérisé en ce que** le conduit (26) s'étend en saillie d'une face latérale interne (24) de l'élément isolant (18) en direction d'un axe (5) du stator.

4. Alternateur selon l'une quelconque des revendications 1 à 3, **caractérisé en ce que** le ou chaque conduit (26) reçoit un toron (16) de fil de phase de l'enroulement (14).

5. Alternateur selon l'une quelconque des revendications 1 à 4, **caractérisé en ce que** l'élément isolant (18) est interposé radialement entre le carter et l'enroulement par référence à un axe (5) du stator.

6. Alternateur selon l'une quelconque des revendications 1 à 5, **caractérisé en ce que** l'élément isolant (18) est interposé axialement entre le carter et l'enroulement par référence à un axe (5) du stator.

7. Alternateur selon l'une quelconque des revendications 1 à 6, **caractérisé en ce que** l'élément isolant (18) s'étend en regard d'une face latérale interne de l'enroulement (14).

8. Alternateur selon l'une quelconque des revendications 1 à 7, **caractérisé en ce que** l'élément isolant (18) présente une partie d'indexation (28), notamment un ergot, permettant de repérer la position angulaire du stator autour d'un axe (5) du stator.

9. Alternateur selon la revendication 8, **caractérisé en ce que** le carter (4) présente une deuxième partie d'indexation (30), notamment une rainure, apte à coopérer avec la partie d'indexation (28) de l'élément isolant (18).

10. Procédé de fabrication d'un alternateur pour véhicule, comprenant un carter (4), un enroulement (14) de stator, et un élément électriquement isolant (18) interposé entre le carter et l'enroulement, **caractérisé en ce qu'**on fournit l'élément isolant (18) sous la forme d'un corps solide comprenant au moins un conduit (26), on monte l'élément isolant sur l'un parmi le carter et l'enroulement et on introduit le conduit dans un orifice (32) du carter.

11. Procédé selon la revendication 10, **caractérisé en ce qu'**on monte l'élément isolant (18) sur l'enroulement (14).

12. Procédé selon la revendication 10, **caractérisé en ce qu'**on monte l'élément isolant (18) sur le carter (4).

## Patentansprüche

1. Wechselstromgenerator (2) für Fahrzeuge mit einem Gehäuse (4), einer Ständerwicklung (14) und einem zwischen dem Gehäuse (4) und der Wicklung (14) eingefügten elektrisch isolierenden Element (18), wobei das Isolierelement (18) ein Festkörper ist, der an einem der Teile Gehäuse und Wicklung angebracht ist, **dadurch gekennzeichnet, daß** das Isolierelement (18) wenigstens einen Kanal (26) enthält der sich in einer Öffnung (32) des Gehäuses (4) erstreckt.

2. Wechselstromgenerator nach Anspruch 1, **dadurch gekennzeichnet, daß** sich der Kanal (26) von einer stirnseitigen Fläche des Isolierelements (18) aus erstreckt.

3. Wechselstromgenerator nach Anspruch 1 oder 2, **dadurch gekennzeichnet, daß** sich der Kanal (26) von einer inneren Seitenfläche (24) des Isolierelements (18) aus vorstehend in Richtung einer Achse (5) des Ständers erstreckt.

4. Wechselstromgenerator nach einem der Ansprüche 1 bis 3, **dadurch gekennzeichnet, daß** der bzw. jeder Kanal (26) eine Phasendrahtlitze (16) der Wicklung (14) aufnimmt.

5. Wechselstromgenerator nach einem der Ansprüche 1 bis 4, **dadurch gekennzeichnet**, d a ß das Isolierelement (18) radial zwischen dem Gehäuse und der Wicklung, bezogen auf eine Achse (5) des Ständers, eingefügt ist.

6. Wechselstromgenerator nach einem der Ansprüche 1 bis 5, **dadurch gekennzeichnet, daß** das Isolierelement (18) axial zwischen dem Gehäuse und der Wicklung, bezogen auf eine Achse (5) des Ständers, eingefügt ist.

7. Wechselstromgenerator nach einem der Ansprüche 1 bis 6, **d**a**durch gekennzeichnet**, d a ß sich das Isolierelement (18) gegenüber einer inneren Seitenfläche der Wicklung (14) erstreckt.

8. Wechselstromgenerator nach einem der Ansprüche 1 bis 7, **dadurch gekennzeichnet, daß** das Isolierelement (18) einen Rasterungsteil (28), insbesondere eine Nase, aufweist, der es ermöglicht, die Winkelposition des Ständers um eine Achse (5) des Ständers zu bestimmen.

9. Wechselstromgenerator nach Anspruch 8, **dadurch gekennzeichnet, daß** das Gehäuse (4) einen zweiten Rasterungsteil (30), insbesondere eine Nut, aufweist, der mit dem Rasterungsteil (28) des Isolierelements (18) zusammenwirken kann.

10. Verfahren zur Herstellung eines Wechselstromgenerators für Fahrzeuge mit einem Gehäuse (4), einer Ständerwicklung (14) und einem zwischen dem Gehäuse und der Wicklung eingefügten elektrisch isolierenden Element (18), **dadurch gekennzeichnet, daß** das Isolierelement (18) in Form eines Festkörpers bereitgestellt wird, der wenigstens einen Kanal (26) enthält, das Isolierelement an einem der Teile Gehäuse und Wicklung angebracht wird und der Kanal in eine Öffnung (32) des Gehäuses eingeführt wird.

11. Verfahren nach Anspruch 10, **dadurch gekennzeichnet, daß** das Isolierelement (18) an der Wicklung (14) angebracht wird.

12. Wechselstromgenerator nach Anspruch 10, **dadurch gekennzeichnet**, d a ß das Isolierelement (18) am Gehäuse (4) angebracht wird.

## Claims

1. A vehicle alternator (2) comprising a case (4), a stator winding (14), and an electrically-insulating element (18) interposed between the case (4) and the winding (14), the insulating element (18) being a solid body mounted on one of the case and the winding, the alternator being **characterized in that** the insulating element (18) has at least one duct (26) extending through an orifice (32) in the case (4).

2. An alternator according to claim 1, **characterized in that** the duct (26) extends from a front face of the insulating element (18).

3. An alternator according to claim 1 or 2, **characterized in that** the duct (26) extends so as to project from an inner side face (24) of the insulating element (18) towards an axis (5) of the stator.

4. An alternator according to any one of claims 1 to 3, **characterized in that** the or each duct (26) receives a live wire twisted lead (16) of the winding (14).

5. An alternator according to any one of claims 1 to 4, **characterized in that** the insulating element (18) is interposed between the case and the winding radially relative to an axis (5) of the stator.

6. An alternator according to any one of claims 1 to 5, **characterized in that** the insulating element (18) is interposed between the case and the winding axially relative to an axis (5) of the stator.

7. An alternator according to any one of claims 1 to 6, **characterized in that** the insulating element (18) extends in register with an inner side face of the winding (14).

8. An alternator according to any one of claims 1 to 7, **characterized in that** the insulating element (18) has an indexing portion (28), in particular a stud, enabling the angular position of the stator around an axis (5) of the stator to be identified.

9. An alternator according to claim 8, **characterized in that** the case (4) has a second indexing portion (30), in particular a groove, suitable for co-operating with the indexing portion (28) of the insulating element (18).

10. A method of manufacturing a vehicle alternator comprising a case (4), a stator winding (14), and an electrically-insulating element (18) interposed between the case and the winding, the method being **characterized in that** the insulating element (18) is supplied in the form of a solid body having at least one duct (26), the insulating element is mounted on one of the case and the winding, and the duct is inserted through an orifice (32) in the case.

11. A method according to claim 10, **characterized in that** the insulating element (18) is mounted on the winding (14).

12. A method according to claim 10, **characterized in that** the insulating element (18) is mounted on the case (4).
